# EUROPÄISCHE PATENTANMELDUNG

(11) **EP 1 081 467 A2**
(43) Veröffentlichungstag der Anmeldung: **07.03.2001**
(21) Anmeldenummer: 00117122.2
(22) Anmeldetag: 10.08.2000
(51) Int. Cl.: G01F 23/20, G01F 23/02

(54) **Vorrichtung zum Messen des Flüssigkeitstandes**

(30) Priorität: 31.08.1999 DE 29915256 U
(71) Anmelder: Sailer, Johann, 89335 Deubach (DE)
(72) Erfinder: Sailer, Johann, 89335 Deubach (DE)
(74) Vertreter: Munk, Ludwig, Dipl.-Ing.

(57) **Zusammenfassung**

Bei einer Vorrichtung zum Messen des Flüssigkeitstandes in einem Behälter lässt sich dadurch auch bei hohem Druck und Temperaturniveau auf einfache Weise eine hohe Genauigkeit erreichen, dass ein neben dem Behälter (1) angeordnetes, mit dem oberen und unteren Bereich des Behälters über je eine flexible Leitung (5,6,10,11,14,15) an den Behälter angeschlossenes Messrohr (7) vorgesehen ist und dass das Messrohr auf einer einen den Flüssigkeitsstand im Behälter proportionalen Messwert anzeigenden Waage (8) aufgenommen ist.

## Beschreibung

Die Erfindung betrifft eine Vorrichtung zum Messen des Flüssigkeitsstandes in einem Behälter.

Der Erfindung liegt die Aufgabe zu Grunde, eine einfache, genau messende Vorrichtung der eingangs genannten Gattung zu schaffen, die auch zur Überwachung von Behältern, in denen hohe Drucke und Temperaturen auftreten, geeignet ist.

Erfindungsgemäß wird dies dadurch erreicht, dass ein neben dem Behälter angeordnetes, mit dem oberen und unteren Bereich des Behälters über je eine flexible Leitung an den Behälter angeschlossenes Messrohr vorgesehen ist und dass das Messrohr auf einer einen den Flüssigkeitsstand im Behälter proportionalen Messwert anzeigenden Waage aufgenommen ist.

Eine derartige Vorrichtung weist einen einfachen Aufbau auf, da im Fluidkreis lediglich ein Messrohr und zwei flexible Leitungen sowie außerhalb des Kreises eine Waage erforderlich sind. Dies minimiert den Aufwand für die Anschaffung, die Montage und den Betrieb dieser Vorrichtung. Außerdem liefert die Vorrichtung eine sehr geaue Messung, da die Temperatur sowie ein etwaiger Dampf- oder Radiolysegehalt des Fluids im Messrohr keinen Einfluß, auf die Messgenauigkeit haben. Es wird nur die Gewichtsveränderung ermittelt und über diese die Füllstandsänderung bzw. bei entsprechender Eichung der Füllstand im Behälter. Auf Grund des einfachen Aufbaus ist auch die Zuverlässigkeit der Messvorrichtung sehr hoch, da nur wenige Anschlüsse vorhanden sind, an denen Leckagen auftreten können. Letztlich bietet die erfindungsgemäße Vorrichtung auch den Vorteil einer analogen Messung. Der momentane Füllstand des Behälters kann in jedem Augenblick in Folge der analogen Messung abgelesen werden.

Weitere Merkmale und Vorteile ergeben sich aus der Beschreibung einiger Ausführungsbeispiele an Hand der Zeichnung und den Unteransprüchen.

In der Zeichnung zeigen schematisch:
- Figur 1: einen senkrechten Schnitt durch die Vorrichtung und den Behälter sowie
- Figur 2 und 3: zwei weitere Ausführungsbeispiele in einer der Figur 1 entsprechenden Darstellung.

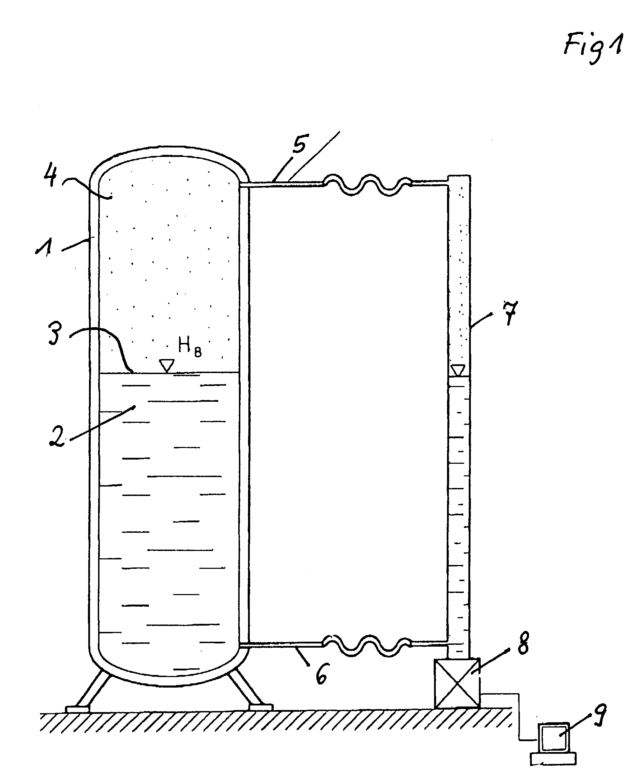

Die Anordnung gemäß Figur 1 weist einen Behälter 1 auf, der in diesem Fall als Reaktor-Druckbehälter ausgeführt ist. In dem Behälter 1 ist eine Flüssigkeit 2 enthalten, über deren Flüssigkeitsspiegel 3 sich Dampf 4 befindet. Vom oberen und unteren Bereich des Behälters zweigt je eine flexible Leitung 5 bzw. 6 ab. Die Leitung 5 führt zum oberen Ende eines Messrohrs 7, während die flexible Leitung 6 zum unteren Ende des Messrohrs 7 führt. Die Leitungen 5, 6 sind als flexible Metallschläuche ausgeführt. Sie verhindern daher eine Übertragung von thermischen Verformungen des Behälters 1 auf das Messrohr 7. Die Durchmesser der flexiblen Leitungen sind zweckmäßig geringer als der Durchmesser des Messrohres gewählt, um auf das Messrohr wirkende Kräfte, die durch Temperaturänderungen der flexiblen Leitungen auftreten können, möglichst gering zu halten. Aus dem gleichen Grunde kann die obere flexible Leitung 5, die in dem nur Dampf enthaltenden Teil des Behälters 1 mündet, nochmals mit einem kleineren Durchmesser als die Leitung 6 ausgeführt sein.

Das Messrohr 7 ist vorteilhaft senkrecht zum Flüssigkeitsspiegel des Behälters angeordnet. Es weist über seine gesamte Länge eine konstante innere Querschnittsfläche auf. Das Messrohr 7 ruht auf einer Waage 8. Die Waage 8 ist eine elektromechanische Waage, die Dehnmesstreifen zur Änderung eines die Anzeige des Messwertes bestimmenden Widerstandes aufweist. Die Waage 8 ist mit einem Rechner 9 elektrisch verbunden, in den Korrekturwerte, wie beispielsweise das Eigengewicht des Messrohres sowie der auf das Messrohr wirkende Anteil des Gewichts der flexiblen Leitungen 5, 6, eingegeben werden können und der den Messwert anzeigt oder den Messwert auf eine räumlich davon getrennte Anzeigevorrichtung überträgt.

Eine derartige Messvorrichtung ist weitgehend unempfindlich gegen Verschmutzung, Feuchtigkeit und mechanische sowie thermische Beanspruchungen. Sie ist daher weitgehend wartungsfrei.

Bei Einsatz einer elektromechanischen Waage ergeben sich die weiteren Vorteile, dass sich die Waagenhöhe bei Belastung nicht ändert und dass horizontale, auf das Messrohr wirkende Kräfte keinen Einfluß auf die Messgenauigkeit haben. Außerdem bietet eine elektromechanische Waage eine hohe Messgenauigkeit.

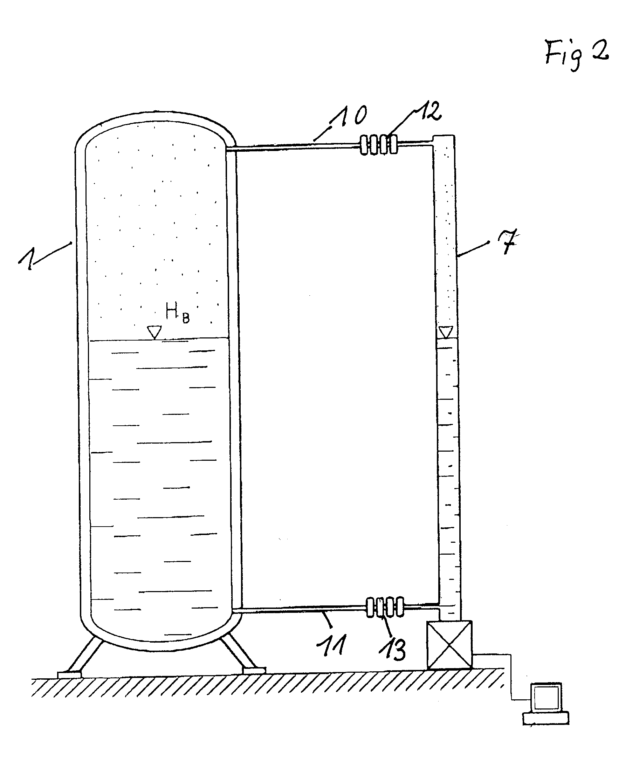

Das Ausführungsbeispiel gemäß Figur 2 zeigt eine abweichende Ausgestaltung der flexiblen Leitungen 10, 11 zwischen dem Behälter 1 und dem Messrohr 7. Hier nimmt jede der beiden Leitungen 10, 11 je einen Kompensator 12, 13 auf, der aus gewellten Rohrabschnitten besteht.

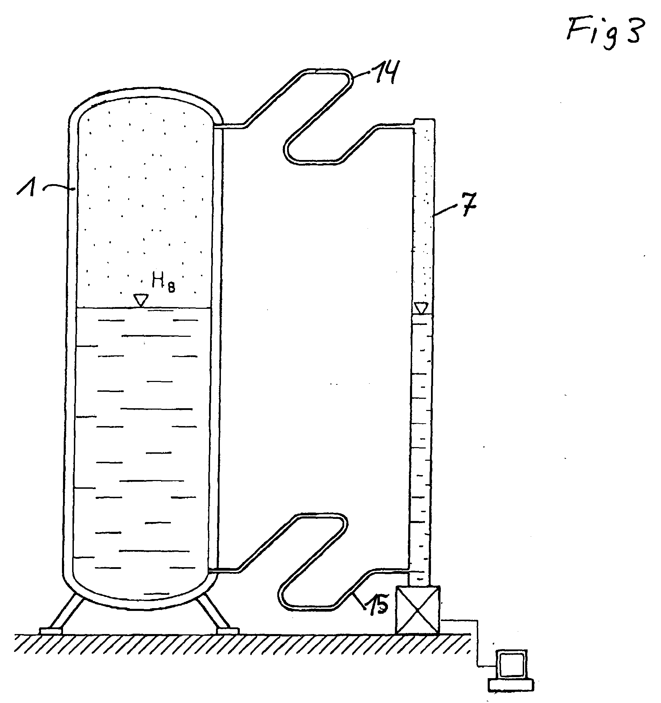

Letztlich zeigt die Ausführungsform gemäß Figur 3, dass die Leitungen 14, 15 zwischen dem Behälter 1 und dem Messrohr 7 auch aus insgesamt in Schleifen und damit nachgiebig geführten Rohren geringen Durchmessers bestehen können.

Die Kompensatoren 12, 13 oder die in Schleifen geführten Leitungen 14, 15 verhindern die Übertragung von in Längsrichtung des Messrohres 7 wirkenden Kräfte auf dieses Rohr.

## Patentansprüche

1. Vorrichtung zum Messen des Flüssigkeitsstandes in einem Behälter, **dadurch gekennzeichnet, dass** ein neben dem Behälter (1) angeordnetes, mit dem oberen und unteren Bereich des Behälters über je eine flexible Leitung (5,6,10,11,14,15) an den Behälter angeschlossenes Messrohr (7) vorgesehen ist und dass das Messrohr auf einer einen den Flüssigkeitsstand im Behälter proportionalen Messwert anzeigenden Waage (8) aufgenommen ist.

2. Vorrichtung nach Anspruch 1, **dadurch gekennzeichnet, dass** das Messrohr (7) senkrecht zum Flüssigkeitsspiegel (3) des Behälters (1) angeordnet ist.

3. Vorrichtung nach Anspruch 1 oder 2, **dadurch gekennzeichnet, dass** das Messrohr (7) über seine gesamte Länge eine konstante innere Querschnittsfläche aufweist.

4. Vorrichtung nach einem der vorhergehenden Ansprüche, **dadurch gekennzeichnet, dass** die flexiblen Leitungen (5,6,10,11,14,15) einen kleineren Durchmesser als das Messrohr (7) aufweisen.

5. Vorrichtung nach einem der vorhergehenden Ansprüche, **dadurch gekennzeichnet, dass** die obere flexible Leitung (5) einen kleineren Durchmesser als die untere flexible Leitung (6) aufweist.

6. Vorrichtung nach einem der vorhergehenden Ansprüche, **dadurch gekennzeichnet, dass** jede flexible Leitung (5,6) aus einem Metallschlauch besteht.

7. Vorrichtung nach einem der Ansprüche 1 bis 5, **dadurch gekennzeichnet, dass** jede flexible Leitung (10,11) aus einer einen Kompensator (12,13) aufnehmenden Rohrleitung besteht.

8. Vorrichtung nach einem der Ansprüche 1 bis 5, **dadurch gekennzeichnet, dass** jede flexible Leitung (14,15) aus einer in Schleifen geführten Rohrleitung besteht.

9. Vorrichtung nach einem der vorhergehenden Ansprüche, **dadurch gekennzeichnet, dass** das Messrohr (7) auf einer elektromechanischen Waage (8) aufsitzt.

10. Vorrichtung nach Anspruch 9, **dadurch gekennzeichnet, dass** die Waage (8) Dehnmesstreifen zur Änderung eines die Anzeige des Messwertes bestimmenden Widerstandes aufweist.
